# EUROPÄISCHE PATENTSCHRIFT

(11) **EP 1 728 316 B1**
(45) Veröffentlichungstag und Bekanntmachung des Hinweises auf die Patenterteilung: **11.08.2010**
(21) Anmeldenummer: 05707940.2
(22) Anmeldetag: 04.02.2005
(51) Int. Cl.: H02P 6/22, H02P 6/18

(54) **VERFAHREN ZUM STARTEN EINES SENSORLOSEN, ELEKTRONISCH KOMMUTIERBAREN GLEICHSTROMMOTORS**
METHOD FOR STARTING A SENSORLESS, ELECTRONICALLY COMMUTATABLE DIRECT CURRENT MOTOR
PROCEDE DE DEMARRAGE D'UN MOTEUR A COURANT CONTINU DEPOURVU DE DETECTEUR ET A COMMUTATION ELECTRONIQUE

(30) Priorität: 18.03.2004 DE 102004013241
(43) Veröffentlichungstag der Anmeldung: 06.12.2006
(73) Patentinhaber: ROBERT BOSCH GMBH, 70442 Stuttgart (DE)
(72) Erfinder: BOSCH, Volker, 70567 Stuttgart (DE); WIRNITZER, Bernd, 70711 Leinfelden-Echterdingen (DE)
(86) Internationale Anmeldenummer: PCT/EP2005/050480
(87) Internationale Veröffentlichungsnummer: WO 2005/091489

(56) Entgegenhaltungen:
- US-A- 4 912 378
- US-A- 5 117 165
- US-A1- 2001 030 517
- NOGUCHI, T.; KOHNO, S.: "Mechanical-sensorless permanent-magnet motor drive using relative phase information of harmonic currents caused by frequency-modulated three-phase PWM carriers" IEEE TRANSACTIONS ON INDUSTRY APPLICATIONS, Bd. 39, Juli 2003 (2003-07), Seiten 1085-1092, XP002338012
- JEONG, Y.; LORENZ, R.D.; JAHNS, T.M.; SUL, S.: "Initial rotor position estimation of an interior permanent magnet synchronous machine using carrier-frequency injection methods" IEEE INTERNATIONAL ELECTRIC MACHINES AND DRIVES CONFERENCE, 2003. IEMDC'03., Bd. 2, Juni 2003 (2003-06), Seiten 1218-1223, XP002338013

## Beschreibung

### Stand der Technik

Die Erfindung betrifft ein Verfahren zum Starten eines sensorlosen, elektronisch kommutierbaren Gleichstrommotors nach dem Oberbegriff des Anspruchs 1. Ein derartiges Verfahren ist beispielsweise aus der Dissertation D 93 der Universität Stuttgart von Volker Bosch unter dem Titel "Elektronisch kommutierter Einzelspindelantriebssystem", Shaker Verlag, Aachen, 2001 bekannt. Bei derartigen, elektronisch kommutierten Gleichstrommotoren, welche die Läuferlage nicht über Sensoren erfassen, ist die absolute Position des Rotors im Stillstand nicht bekannt. Zur Ausgangspositionierung des Motors wird deshalb der Rotor zu Beginn des Anlaufvorgangs zunächst in eine vorgegebene Ausgangsposition gebracht, indem zwei oder drei Stränge des Motors bestromt werden, sodass sich der Rotor entsprechend ausrichtet. Nach einer definierten Wartezeit erfolgt dann ein gesteuerter Anlauf des Motors durch schrittweise Bestromung weiterer Motorstränge. Hierbei liefert das in der genannten Veröffentlichung beschriebene Verfahren zur sensorlosen Läuferlageerfassung prinzipbedingt jedoch erst oberhalb einer bestimmten Mindestdrehzahl des Rotors ein zuverlässiges Lagesignal, weshalb dieses Verfahren nicht direkt für den Anlauf des Motors verwendet werden kann. Dieser erfolgt somit gesteuert und nicht geregelt, das heißt, ein Blockieren des Rotors kann nicht sofort erkannt und ausgeregelt werden. Für Motoren mit variabler Belastung ist dieses bekannte Verfahren daher nur bedingt geeignet.

Auch das Verfahren aus dem Dokument US4912378 empfiehlt zum Anfahren eine Steuerung, bis etwa 10% der maximalen Drehzahl. Danach setzt eine Regelung ein, bei der die dritte Oberschwingung der gemittelten Polradspannungen gegen den Sternpunkt verwendet wird.

Eine Drehzahlregelung, die auch im Stillstand funktioniert, wird in der IEEE-Veröffentlichung "Mechanical-sensorless permanent-magnet motor drive using relative phase information of armonic currents caused by frequencymodulated three-phase PWM carriers." von 2003 beschrieben. Das Verfahren beruht auf der Auswertung der Stromoberschwingungen infolge der Schaltfrequenz der Pulsweitenmodulation. Der Raumzeiger der Stromoberschwingungen, die der Schaltfrequenz entsprechen, umschreibt eine Ellipse, deren Phasendrehung vom Berechnungsfehler des Rotorlagewinkels abhängt, und somit ein Kriterium zum genauen Bestimmen des Winkels im gesamten Drehzahlbereich liefert

Der Erfindung liegt die Aufgabe zugrunde, das bekannte Verfahren dahingehend zu verbessern, dass mit möglichst geringem technischem und wirtschaftlichem Aufwand auch der Anlauf eines derartigen Motors mit sensorloser Läuferlageerfassung geregelt erfolgen kann, wobei die Dauer und der Betrag der Anlaufbestromung an die jeweilige Belastung des Motors anpassbar sind. Hierdurch sollen neben einer schnellen Erkennung einer Blockierung des Motors ein zuverlässiger Anlauf unter starker Last, beziehungsweise ein Anlauf des Motors unter geringer Last in möglichst kurzer Zeit erreicht werden.

Die Aufgabe wird gelöst durch die kennzeichnenden Merkmale des Anspruchs 1. Insbesondere ist es hierbei möglich, durch die sensorlose Lageerfassung des Rotors bereits im Stillstand eine zuverlässige, lastabhängige Regelung des Anlaufvorgangs des Motors zu erreichen und weiterhin nach Überschreitung eines vorgegebenen Mindestwertes der Rotordrehzahl eine vorteilhafte andersartige Drehzahlregelung des Motors durch die Auswertung der dritten und/oder weiterer ungeradzahliger Oberwellen der Strangspannungen zu verwenden. Für die Ermittlung der Position des Rotors im Stillstand konnte hierbei auf ein aus der DE 101 62 380 A1 bekanntes Verfahren zurückgegriffen werden, mit dem sich eine Vorbestromung zum Verdrehen des Rotors in eine definierte Ausgangsposition erübrigt. Nach dem Anlaufen der Maschine und insbesondere bei hohen Drehzahlen wird dieses bekannte Verfahren jedoch sehr aufwändig und erfordert einen sehr leistungsfähigen und schnellen Rechner für die Ermittlung der jeweils aktuellen Rotorposition, deren Kenntnis für die Regelung notwendig ist.

Ab einer gewissen Mindestdrehzahl des Rotors der Maschine kann mit Vorteil eine sensorlose Rotorlageerfassung auf der Basis der Detektierung der dritten Harmonischen verwendet werden, wie sie grundsätzlich in der EP 735 663 B1 oder in der genannten Dissertation D 93 der Universität Stuttgart beschrieben ist. Durch eine geeignete Kombination der beiden an sich bekannten, jedoch auf sehr unterschiedlichen Erkenntnisse und Methoden beruhenden Verfahren mit einer neuen Anlaufsteuerung wird es möglich, eine zuverlässige und preiswerte Regelung eines sensorlosen, elektronisch kommutierbaren Gleichstrommotors zu schaffen, bei dem entsprechend der gestellten Aufgabe ein geregelter Start aus dem Stillstand heraus sowie eine zweckmäßige Regelung des Motors im Normalbetrieb erreicht werden.

Als besonders vorteilhaft für die schaltungstechnische Realisierung des Verfahrens hat es sich erwiesen, wenn nach der Ermittlung der Ruhelage des Rotors das aus den dritten und/oder weiteren ungeradzahligen Oberwellen der Strangspannungen einerseits über einen Sternpunkt der Statorwicklungen und andererseits über einen aus drei Phasenwiderständen gebildeten Hilfssternpunkt abgegriffene und integrierte Nullspannungssignal der Maschine einerseits im Stillstand und zu Beginn des Anlaufvorgangs des Motors über einen A/D-Wandler und andererseits im Bereich oberhalb eines vorgegebenen Mindestwertes der Rotordrehzahl über einen Komparator mit Hysterese der Steuervorrichtung für die Schalteinrichtung des Motors zugeführt werden. So erhält man mit einem preiswerten Rechner einerseits eine einfache Positionsbestimmung des Rotors im Stillstand mit der Möglichkeit der lastabhängigen Bemessung und Regelung des Anlaufstromes des Motors und andererseits ohne den erforderlichen hohen Rechenaufwand für die jeweilige Bestimmmung der Rotorlage bei hohen Drehzahlen die Möglichkeit zur Regelung der Maschine im Normalbetrieb.

Kern der Steuervorrichtung ist ein Mikrocontroller, welchem einerseits die Ausgangssignale eines Komparators für die Positionsbestimmung des Rotors im Stillstand und andererseits die Ausgangssignale eines Integrators zur Drehzahlregelung beim Anlauf und im Normalbetrieb zugeführt werden. Über die Ausgänge des Mikrocontrollers der Steuervorrichtung erfolgt in grundsätzlich bekannter Weise die Kommutierung und Steuerung der Phasenströme mittels einer vorzugsweise mit MOSFET-Transistoren aufgebauten Vollbrücken-Wechselrichterschaltung, welche über einen zugeordneten Transistortreiber mit Pulsweitenmodulation betrieben wird.

Weitere Einzelheiten und vorteilhafte Ausgestaltungen des erfindungsgemäßen Verfahrens ergeben sich aus der Beschreibung des Ausfuhrungsbeispiels sowie aus den Unteransprüchen.

Die Zeichnung zeigt in
Figur 1 einen dreiphasigen, sensorlosen, elektronisch kommutierbaren Gleichstrommotors mit permanentmagnetisch erregtem Rotor und in
Figur 2 den prinzipiellen zeitlichen Verlauf des integrierten analogen Rotorlagesignals während des Anlaufs.

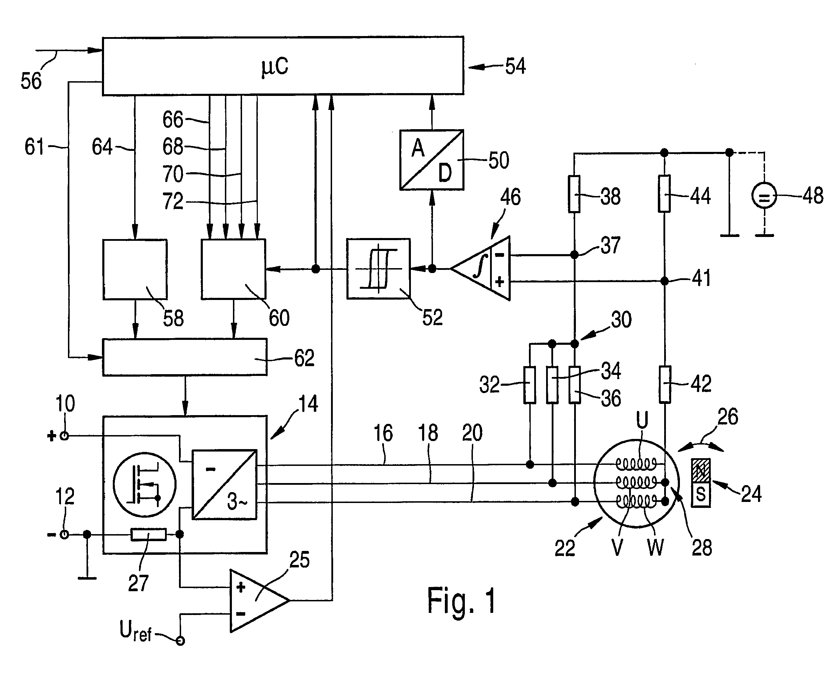

In Figur 1 sind mit 10 der Pluspol und mit 12 der mit Masse verbundene Minuspol einer Gleichspannungsquelle bezeichnet, welche einen als sechspulsige Umrichterbrücke mit MOSFET-Transistoren aufgebauten Wechselrichter 14 speist. Die Ausgänge des Wechselrichters sind über Zuleitungen 16,18,20 mit den Phasenwicklungen U,V,W des Stators 22 eines sensorlosen, elektronisch kommutierbaren Gleichstrommotors verbunden, dessen permanentmagnetisch erregter Rotor mit 24 bezeichnet ist. Ein Doppelpfeil 26 am Rotor 24 zeigt, dass dieser in entgegengesetzte Drehrichtungen angetrieben werden kann.

Über einen weiteren Ausgang des Wechselrichters 14 wird der Strom im Gleichspannungskreis bei der Beaufschlagung der Phasenwicklungen U,V,W mit Stromimpulsen zur Ermittlung der Rotorlage im Stillstand der Maschine einem an Masse liegenden Mess-Shunt 27 zugeführt. Der Spannungsabfall an dem Shunt 27 wird in einem Komparator 25 mit einer Referenzspannung Uref verglichen und das Ausgangssignal des Komparators 25 zur Ermittlung der Rotor-Stillstandsposition einer Steuervorrichtung 54 zugeführt wo entsprechend dem durch die Position des Rotors bedingten schnellsten Stromanstieg in den Phasenwicklungen U,V,W die Rotorposition bestimmbar ist. Im Einzelnen ist dieses Verfahren in der DE 101 62 380 A1 beschrieben, auf die Ausführungen in dieser Druckschrift wird Bezug genommen.

Die Phasenwicklungen U,V,W sind zu einem Sternpunkt 28 zusammengeschaltet, ein weiterer Sternpunkt 30 wird mittels dreier Phasenwiderstände 32,34,36 gebildet, deren Enden einerseits zu dem Sternpunkt 30 zusammengeschaltet und andererseits mit den Zuleitungen 16,18,20 zu den Phasenwicklungen U,V,W verbunden sind. Die Phasenwiderstände 32,34 und 36 bilden weiterhin gemeinsam mit einem Widerstand 38 einen ersten, mit Masse verbundenen Spannungsteiler, dessen Abgriff 37 mit dem negativen Eingang eines als Integrator 46 beschalteten Operationsverstärkers verbunden ist. Der positive Eingang des Integrators 46 liegt am Abgriff 41 eines aus zwei Widerständen 42 und 44 gebildeten Spannungsteilers, wobei das vom Abgriff 41 abgewandte Ende des Widerstandes 44 gemeinsam mit dem entsprechenden Ende des Widerstandes 38 an Masse liegt. Der Integrator 46 ist dabei einteilig aus einem Operationsverstärker aufgebaut. Hinsichtlich des Fußpunktes der an die beiden Stempunkte 28 und 30 angeschlossenen Spannungsteiler kann es erforderlich sein, die miteinander verbundenen Enden der Widerstände 38 und 44 an eine gestrichelt dargestellte Hilfsspannungsquelle 48 anzuschließen, welche bei Verwendung einer unipolaren Spannungsquelle das Ruhesignal für die Lageerfassung bereitstellt.

Der Ausgang des Integrators 46 ist einerseits über einen A/D-Wandler 50 und andererseits über einen Komparator 52 mit Hysterese an einen Mikrocontroller (µC) der Steuervorrichtung 54 angeschlossen. An weiteren Eingängen werden dem Mikrocontroller ein Signal 56 für die Solldrehzahl der Maschine sowie das Ausgangssignal des Komparators 25 zugeführt. Die Ausgänge des Mikrocontrollers sind über einen Pulsweitenmodulator 58, einen Auf/Ab-Zähler 60 und einen Freigabeanschluss 61 mit einem Transistortreiber 62 für den Wechsehichter 14 verbunden. Der Auf/Ab-Zähler 60 liegt weiterhin auch am Ausgang des Komparators 52. Vom Mikrocontroller der Steuervorrichtung 54 erhält der Auf/Ab-Zähler 60 Signale über die Rotor-Startposition, ein Ladesignal, ein Freigabesignal sowie ein Signal für die Aufbeziehungsweise die Abwärtszählung entsprechend dem gewünschten Rechts- oder Linkslauf des Motors. Hierbei sind alle Verbindungsleitungen durch Einfachlinien dargestellt, die tatsächliche Zahl der Leitungen für die einzelnen Verbindungen ist jeweils durch eine Ziffer angegeben. Die Zuleitung zum Pulsweitenmodulator 58 ist mit 64 bezeichnet, die Zuleitung zum Zähler 60 für die Rotor-Startposition mit 66, die Zuleitung für das Laden des Zählers mit 68, die Zuleitung für die Freigabe des Zählers mit 70 und die Zuleitung für den Rechts- beziehungsweise Linkslauf mit 72.

Das erfindungsgemäße Verfahren zum Starten eines sensorlosen, elektronisch kommutierbaren Gleichstrommotors mit permanentmagnetisch erregtem Rotor arbeitet folgendermaßen:
Vor dem Starten des Motors wird zunächst mittels des Mess-Shunts 27, einer Referenzspannung Uref, des Komparators 25 und des Mikrocontrollers µC die aktuelle Rotorposition im Stillstand ermittelt. Ein hierfür geeignetes Verfahren ist beispielsweise in der DE 10162 380 A1 beschrieben. Hierbei wird zunächst eine Mehrzahl von kurzen Stromimpulsen über den Wechselrichter 14 auf die Phasenwicklungen U,V,W aufgeschaltet, wobei in den Statorwicklungen bei jedem Stromimpuls ein Stromanstieg erfolgt, dessen Anstiegsgeschwindigkeit von der Stellung des Rotors 24 abhängig ist. Die Zeiten bis zum Erreichen einer vorgegebenen Schwelle werden am Komparator 25 gemessen. Dabei wird eine Mehrzahl von Teststromimpulsen nacheinander so auf die Statorwicklungen aufgeschaltet, dass die Teststromimpulse im Stator über 360°(el.) um gleiche Winkelschritte versetzte Statordurchflutungsvektoren erzeugen. Zu jedem Statordurchflutungsvektor wird dabei die Stromanstiegszeit im speisenden Gleichspannungskreis gemessen, wobei die Phasenlage des Statordurchflutungsvektojs mit der kürzesten Stromanstiegszeit die Rotorposition definiert. Im Einzelnen ist dieses für die Bestimmung der Stillstandsposition des Rotors geeignete Verfahren in der vorgenannten Veröffentlichung detailliert beschrieben und braucht hier nicht nochmals ausführlich erläutert werden.

Nach der Bestimmung der Rotorposition wird vor dem Anlauf des Motors der Auf/Ab-Zähler 60 durch den Mikrocontroller der Steuervorrichtung 54 mit einem Startwert beaufschlagt, welcher der zuvor ermittelten Rotorstartposition entspricht. Das weitere Verfahren zum Starten und zur Drehzahlregelung der Maschine basiert dann auf einer Methode zur sensorlosen Läuferlageerfassung durch Auswertung der dritten und/oder der weiteren ungeradzahligen Oberwellen der Strangspannungen des Motors. Diese sind durch die nicht sinusförmige Feldverteilung im Luftspalt oberschwingungsbehaftet, wobei wegen der zur Polmitte symmetrischen Erregerfeldverteilung nur die Oberwellen mit ungeraden Ordnungszahlen auftreten. Wegen des trapezförmigen bis rechteckförmigen Verlaufs der Luftspaltflussdichte hat hierbei insbesondere die dritte Oberwelle der Flussdichte, welche dann auch als dritte Oberwelle in den Strangspannungen erscheint, eine beachtliche Größe, die restlichen Oberwellen können bei der Betrachtung in der Regel vernachlässigt werden.

Durch die Sternschaltung der Phasenwicklungen U,V,W treten in den einzelnen Wicklungen keine dritten Stromoberschwingungen auf, da die in allen drei Phasen induzierten dritten Oberschwingungen in Phase und Betrag gleich sind. Die dritten Oberwellen bilden dabei ein Nullsystem, welches sich leicht aus der Spannungsdifferenz zwischen dem Sternpunkt 28 der Phasenwicklungen und einem künstlichen, durch die drei Phasenwiderstände 32,34,36 gebildeten Sternpunkt ergibt, da dieser künstliche Sternpunkt 30 kein Nullspannungssystem nachbildet.

Zum Starten des Motors wird nun zunächst die Spannungsdifferenz zwischen den beiden Stempunkten 28 und 30 ermittelt, indem die beiden Sternpunktspannungen über die Abgriffe 37 und 41 von Spannungsteilern mit den parallel geschalteten Phasenwiderständen 32,34,36 und dem Widerstand 38, beziehungsweise den Widerständen 42 und 44 an die Eingänge des integrierenden Differenzverstärkers 46 gelegt werden. Hierbei wird der Abgriff 37 des Spannungsteilers am Sternpunkt 28 der Phasenwicklungen auf den positiven Eingang und der Abgriff 41 am Spannungsteiler des Widerstands- Sternpunktes 30 auf den negativen Eingang des Integrators 46 aufgeschaltet. Die beiden Sternpunktspannungen sind dabei über die Spannungsteiler auf Massepotential bezogen.

Das Differenzsignal an den Eingängen des Integrators 46 ist eine reine Wechselspannung, die Amplitude des Differenzsignals ist proportional zu der Amplitude der Polradspannung. Da diese mit steigenden Motordrehzahlen zunimmt wird der verwendete Operationsverstärker als Integrator 46 beschaltet, um eine Übersteuerung zu vermeiden. Die beiden Funktionen des Operationsverstärkers bilden einen Integrator 46 mit Differenzeingängen, wobei am Ausgang des Integrators 46 eine Spannung mit konstanter Amplitude erzeugt wird. Weiterhin ergibt sich eine Phasenverschiebung der Ausgangsspannung des Integrators 46 gegenüber seiner Eingangsspannung der Art, dass die zeitliche Lage der Nulldurchgänge am Ausgang des Integrators 46 den Extremwerten der dritten Oberwelle und damit den Kommutierungszeitpunkten des Wechselrichters 14 entsprechen.

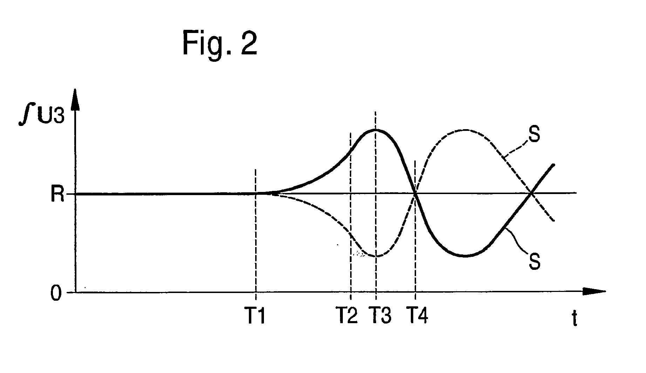

Figur 2 zeigt den prinzipiellen zeitlichen Verlauf des analogen Lagesignals ∫U3 während des Anlaufvorgangs. Hierbei handelt es sich bis zum Zeitpunkt T1 um ein Ruhesignal. Zum Zeitpunkt T1 setzt sich der Rotor 24 in Bewegung, jedoch erst etwa zu dem Zeitpunkt T2 liefert das rechteckförmige Ausgangsignal des mit Hysterese arbeitenden Komparators 52 eine verwertbare Lageinformation. Hierbei kann sowohl die Kurvenform mit dem Wendepunkt bei T2, das nachfolgende Maximum oder Minimum oder auch ein absoluter Wert des Signals zur Ermittlung einer kontinuierlichen Lageinformation verwendet werden. Die gestrichelte Kurve in Figur 2 zeigt an, dass je nach Ausgangsposition des Rotors 24 das Signal entweder in der Form der durchgezogenen Linie nach dem Start des Motors ansteigen oder auch entsprechend der gestrichelten Linie abfallen kann, wobei die gestrichelte Linie einer Spiegelung an der Geraden durch den Ruhewert des Signals entspricht.

Das Rotorlagesignal am Ausgang des Integrators 46 wird gleichzeitig dem mit Hysterese arbeitenden Komparator 52 und dem A/D-Wandler 50 zugeführt. Am Ausgang des Integrators 46 steht ein analoges, in erster Näherung sinusförmiges Läuferlagesignal ∫U3 zur Verfügung, welches über den A/D-Wandler 50 dem Mikrocontroller µC zugeführt wird, sodass die Steuervorrichtung 54 den Wert dieses Signals zu jedem Zeitpunkt erfassen kann. Der A/D-Wandler 50 stellt dem Mikrocontroller das aktuelle Lagesignal als 8-Bit-Wert in binärer Form zur Verfügung, wobei jedem Durchgang des Rotorlagesignals durch den Ruhewert (Figur 2) genau eine fallende oder ansteigende Flanke entspricht.

Das binäre Signal des Komparators 52 liegt außerdem an dem binären Auf/Ab-Zähler 60 an, welcher mit jeder Flanke des binären Lagesignals um einen Wert aufwärts oder abwärts zählt. Der Zähler kennt dabei 6 Zustände entsprechend jeweils 60°el. der Lage des Rotors 24. Der Mikrocontroller der Steuervorrichtung 54 gibt über die Zuleitung 70 den Zähler 60 frei und bestimmt über die Zuleitung 72 durch die Zählrichtung aufwärts, beziehungsweise abwärts die Drehrichtung des Motors. Über die Zuleitung 68 erhält der Zähler 60 das Signal "Laden" woraufhin er mit einem 3-Bit breiten Startwert über die Zuleitung 66 entsprechend der zuvor ermittelten Startposition des Rotors 24 initialisiert wird. Von dem Auf/Ab-Zähler 60 werden dann die 6 möglichen Zählerstände als 3-Bit-Datum dem Transistortreiber 62 für den Wechselrichter 14 zugeführt, welcher aus dem Zählerstand die zu aktualisierenden Schaltelemente bestimmt. Hierbei handelt es sich vorzugsweise um MOSFET-Transistoren.

Nach dem Auf/Ab-Zähler 60 wird auch der Pulsweitenmodulator 58 über die Zuleitung 64 durch den Mikrocontroller µC mit einem Startwert initialisiert. Die Steuerung der Schaltelemente des Wechselrichters 14 erfolgt entsprechend dem durch den Pulsweitenmodulator 58 über den Transistortreiber 62 vorgegebenen Tastverhältnis, wobei dem Pulsweitenmodulator 58 von dem Mikrocontroller der Steuervorrichtung 54 die Motorspannung als binäres Signal vorgegeben wird. Die Freigabe des Transistortreibers 62 erfolgt direkt durch den Mikrocontroller über den Freigabeanschluss 61. Über den A/D-Wandler 50 verfolgt nun der Mikrocontroller den Wert des analogen Lagesignals, wie es in Figur 2 dargestellt ist. Er erhöht die den Phasenwicklungen U,V,W des Stators 22 vom Wechselrichter 14 zugeführte Motorspannung über den dem Pulsweitenmodulator 58 zugeführten binären Wert so lange, bis das analoge Lagesignal am Ausgang des Integrators 46 seinen in Figur 2 dargestellten Ruhewert zum Zeitpunkt T1 verlässt. In diesem Zeitpunkt wird das Haftmoment des Motors mit der angeschlossenen Last überwunden und das Rotorlagesignal ∫U3 steigt beispielsweise in der in Figur 2 dargestellten Form über seinen Ruhepegel an, durchläuft zum Zeitpunkt T1 erstmals einen Wendepunkt, zum Zeitpunkt T3 ein relatives Maximum oder Minimum und geht bereits zum Zeitpunkt T4 in einen nahezu sinusförmigen Verlauf entsprechend der dritten Oberschwingung der Strangspannungen über. Weicht das analoge Rotorlagesignal ∫U3 um einen definierten Wert von seinem Ruhepegel R ab, beziehungsweise durchläuft das Signal einen Wendepunkt, so gibt der Mikrocontroller den Auf/Ab-Zähler 60 frei, sodass dieser nun durch jede Flanke des binären Lagesignals am Ausgang des Komparators 52 selbsttätig um einen Schritt weiterzählt und hierdurch die Kommutierung des Motorstroms bewirkt. Anschließend erfolgt die Drehzahlregelung des Motors entsprechend dem an den Mikrocontroller der Steuervorrichtung 54 angelegten Signal 56 der Solldrehzahl über die Einstellung des Pulsweitenmodulators 58. Hierzu wird die Frequenz oder die Periodendauer des binären Rotorlagesignals am Ausgang des Komparators 52 durch den Mikrocontroller der Steuervorrichtung 54 ausgemessen.

Zusammenfassend kann festgestellt werden, dass man durch das erfindungsgemäße Verfahren zum Starten eines elektronisch kommutierbaren Gleichstrommotors in besonders vorteilhafter Weise nicht nur einen geregelten Betrieb des Motors im vorgegebenen Drehzahlbereichs erreicht, sondern auch das Anlaufen des Motors kann bereits in geregelter Form durchgeführt und auf Störungen überwacht werden. Dies wird ermöglicht, indem zunächst vor dem eigentlichen Startvorgang die Ruhelage des Rotors ermittelt wird, was bei stillstehendem Rotor nur eine geringe Rechengeschwindigkeit und demzufolge einen verhältnismäßig einfachen und preiswerten Mikrocontroller µC für die Steuervorrichtung 54 erfordert. Durch das anschließende gezielte Bestromen von zwei der Phasenwicklungen U,V,W in einer Weise, dass sich zwischen den Achsen von Rotor- und Statordurchflutung ein Winkel zwischen etwa 60°el. und 120°el. vorzugsweise von etwa 90°el. ergibt, erfährt der Rotor 24 aus dem Stillstand heraus das maximal mögliche beschleunigende Drehmoment Anschließend wird der Strom in den Phasenwicklungen des Stators 22 so lange erhöht, bis der Rotor 24 sich zu drehen beginnt, wobei das Ausgangssignal des Integrators 46 seinen Ruhepegel R verlässt. Nach dem Überschreiten beziehungsweise Unterschreiten eines definierten Grenzwertes des Integratorsignals wird dann die Selbstkommutierung durch die Flanken eines binären Rotorlagesigals freigegeben. Durch die getroffenen Maßnahmen erreicht man also mit geringem schaltungstechnischem Aufwand eine lastabhängige Regelung ohne die Gefahr des Blockieren des Motors beim Anlauf

## Patentansprüche

1. Verfahren zum Starten eines sensorlosen, elektronisch kommutierbaren Gleichstrommotors mit einem permanentmagnetisch erregten Rotor (24) und einem eine mehrphasige Statorwicklung (U, V, W) tragenden Stator (22), sowie mit einer von einer Steuervorrichtung (54) gesteuerten Schalteinrichtung (14) zum folgerichtigen Bestromen der Phasenwicklungen (U, V, W) des Stators (22) aus einer Gleichspannungsquelle (10, 12), wobei im Rotorstillstand und zu Beginn des Anlaufvorgangs im Bereich unterhalb eines Mindestwertes der Rotordrehzahl durch die Steuervorrichtung (54) zunächst die Position des Rotors (24) ermittelt wird und anschließend über die Schalteinrichtung (14) eine geregelte Anfangsbestromung der Phasenwicklungen (U, V, W) des Stators (22) erfolgt, während nach Erreichen des vorgegebenen Mindestwertes der Rotordrehzahl die Steuervorrichtung (54) aus den dritten und/oder aus weiteren ungeradzahligen Oberwellen der Strangspannungen direkt abgeleitete Lagesignale (∫U3) als Rotorpositionssignale für eine Selbstkommutierung des Motors erhält und hieraus Steuersignale an die Schalteinrichtung (14) liefert zur Bestromung der Phasenwicklungen (U, V, W) im Normalbetrieb, und wobei die dritten und/oder die weiteren ungeradzahligen Oberwellen der Strangspannungen des Stators (22) einerseits über den Sternpunkt (28) der Phasenwicklungen (U, V, W) und andererseits über einen aus drei Phasenwiderständen (32, 34, 36) gebildeten Hilfssternpunkt (30) einem Komparator (40) mit nachgeschaltetem Integrator (46) zugeführt werden, **dadurch gekennzeichnet, dass** das Ausgangssignal des Integrators (46) im Stillstand des Motors und zu Beginn des Anlaufvorgangs über einen A/D-Wandler (50) und im Bereich oberhalb des vorgegebenen Mindestwertes der Rotordrehzahl über einen Komparator (52) mit Hysterese der Steuervorrichtung (54) zugeführt wird.

2. Verfahren nach Anspruch 1, **dadurch gekennzeichnet, dass** die Steuervorrichtung (54) im Rotorstillstand Stromimpulse auf die Phasenwicklungen (U, V, W) des Stators aufschaltet und aus dem Stromanstieg in den einzelnen Wicklungen (U, V, W) die Ruheposition des Rotors (24) ermittelt.

3. Verfahren nach Anspruch 1, **dadurch gekennzeichnet, dass** die Dauer und/oder der Betrag der Anfangsbestromung der Phasenwicklungen (U, V, W) des Stators (22) an die jeweilige Belastung des Motors angepasst werden.

4. Verfahren nach einem der vorhergehenden Ansprüche, **dadurch gekennzeichnet, dass** die Steuervorrichtung (54) einen Mikrocontroller (µC) aufweist, welcher als Eingangssignale die Signale eines A/D-Wandlers (50), eines Komparators (52) mit Hysterese sowie ein Solldrehzahl-Signal (56) erhält und mit seinen Ausgängen über eine Treiberstufe (62), eine Schaltereinrichtung (14) zur Bestromung der Phasenwicklungen (U, V, W) des Stators steuert.

5. Verfahren nach einem der vorhergehenden Ansprüche, **dadurch gekennzeichnet, dass** die Steuervorrichtung (54) über den Komparator (52) mit Hysterese nach Erreichen des vorgegebenen Mindestwertes der Rotordrehzahl fortlaufend binäre Lagesignale für die rotorlageabhängige Selbstkommutierung des Motors erhält.

6. Verfahren nach einem der vorhergehenden Ansprüche, **dadurch gekennzeichnet, dass** ab einem vorgebbaren Wert des von dem Integrator (46) gelieferten analogen Rotorlagesignals (∫U3) zwischen seinem Ruhewert (R) und einer etwa sinusförmigen Schwingung (S) die Freigabe des Wechsels von der geregelten Anfangsbestromung der Phasenwicklungen (U, V, W) zu der Kommutierungsregelung durch die Flanken des binären Ausgangssignals des Komparators (52) mit Hysterese entsprechend dem Verlauf der dritten Oberwelle der Strangspannungen erfolgt.

7. Verfahren nach einem der vorhergehenden Ansprüche, **dadurch gekennzeichnet, dass** die Freigabe des Wechsels von der geregelten Anfangsbestimmung (T2 > T > 0) der Phasenwicklungen (U, V, W) zu der Regelung durch das Ausgangssignal des Komparators (52) mit Hysterese mit dem Erreichen eines ersten Wendepunktes (T2) des Ausgangsignals (∫U3) des Integrators (46) erfolgt.

8. Verfahren nach einem der vorhergehenden Ansprüche, **dadurch gekennzeichnet, dass** nach der Ermittlung der Stillstandsposition des Rotors (24) wenigstens zwei Phasenwicklungen (U, V, W) des Stators (22) mit einem Startwert derart bestromt werden, dass sich zwischen den Achsen der Rotor- und Statordurchflutung ein Winkel von 30°el. bis 150°el., vorzugsweise von etwa 90°el. ergibt.

## Claims

1. Method for starting a sensorless, electronically commutatable DC motor with a rotor (24) excited by permanent magnets and a stator (22) bearing a polyphase stator winding (U, V, W), and with a switching device (14), which is controlled by a control apparatus (54), for sequentially energizing the phase windings (U, V, W) of the stator (22) from a DC voltage source (10, 12), wherein, when the rotor is at a standstill and at the beginning of the runup operation, in the region below a minimum value of the rotor speed, first the position of the rotor (24) is determined by the control apparatus (54) and then, via the switching device (14), regulated initial energizing of the phase windings (U, V, W) of the stator (22) takes place, while, once the predetermined minimum value of the rotor speed has been reached, the control apparatus (54) receives position signals (∫U3), which are derived directly from the third and/or from further uneven harmonics of the winding phase voltages, as rotor position signals for self-commutation of the motor and, on the basis of this, sends control signals to the switching device (14) for energizing the phase windings (U, V, W) during normal operation, and wherein the third and/or the further uneven harmonics of the winding phase voltages of the stator (22) are supplied to a comparator (40) with a downstream integrator (46), firstly via the neutral point (28) of the phase windings (U, V, W) and secondly via an auxiliary neutral point (30) formed from three phase resistors (32, 34, 36), **characterized in that** the output signal of the integrator (46), when the motor is at a standstill and at the beginning of the runup operation, is supplied to the control apparatus (54) via an analogue-to-digital converter (50) and, in the region above the predetermined minimum value of the rotor speed, via a comparator (52) with hysteresis.

2. Method according to Claim 1, **characterized in that** the control apparatus (54), when the rotor is at a standstill, connects current pulses to the phase windings (U, V, W) of the stator and, from the current rise in the individual windings (U, V, W), determines the rest position of the rotor (24).

3. Method according to Claim 1, **characterized in that** the duration and/or the magnitude of the initial energization of the phase windings (U, V, W) of the stator (22) are matched to the respective load on the motor.

4. Method according to one of the preceding claims, **characterized in that** the control apparatus (54) has a microcontroller (µC), which receives, as input signals, the signals from an analogue-to-digital converter (50), a comparator (52) with hysteresis and a setpoint rotation speed signal (56) and, with its outputs, controls a switch device (14) for energizing the phase windings (U, V, W) of the stator, via a driver stage (62).

5. Method according to one of the preceding claims, **characterized in that** the control apparatus (54) continuously receives binary position signals for the self-commutation of the motor in a manner dependent on the rotor position via the comparator (52) with hysteresis once the predetermined minimum value of the rotor speed has been reached.

6. Method according to one of the preceding claims, **characterized in that**, above a predetermined value for the analogue rotor position signal (∫U3) produced by the integrator (46) between its rest value (R) and an approximately sinusoidal oscillation (S), the enabling of the change from the regulated initial energizing of the phase windings (U, V, W) to the commutation regulation by the flanks of the binary output signal of the comparator (52) with hysteresis takes place corresponding to the profile of the third harmonic of the winding phase voltages.

7. Method according to one of the preceding claims, **characterized in that** the enabling of the change from the regulated initial energizing (T2 > T > 0) of the phase windings (U, V, W) to the regulation by the output signal of the comparator (52) with hysteresis takes place once a first commutation point (T2) of the output signal (∫U3) of the integrator (46) has been reached.

8. Method according to one of the preceding claims, **characterized in that**, once the standstill position of the rotor (24) has been determined, at least two phase windings (U, V, W) of the stator (22) are energized with a start value in such a way that an angle of 30°el. to 150°el., preferably of approximately 90°el., results between the axes of the rotor and stator current linkage.

## Revendications

1. Procédé de démarrage d'un moteur à courant continu sans détecteurs, à commutation électronique, et présentant un rotor (24) excité par aimant permanent et un stator (22) qui porte un enroulement polyphasé de stator (U, V, W), ainsi qu'un dispositif de commutation (14) commandé par un dispositif de commande (54) qui alimente en courant dans une succession correcte les enroulements de phase (U, V, W) du stator (22) à partir d'une source (10, 12) de tension continue,
la position du rotor (24) étant d'abord déterminée par le dispositif de commande (54) à l'arrêt du rotor et au début de l'opération de démarrage dans la plage située en dessous d'une valeur minimale de la vitesse de rotation du rotor,
une alimentation initiale régulée en courant des enroulements de phase (U, V, W) du stator (22) étant ensuite réalisée par le dispositif de commutation (14),
tandis que lorsque la valeur minimale prédéterminée de la vitesse de rotation du rotor est atteinte, le dispositif de commande (54) reçoit des signaux de position (JU3) dérivés directement de la troisième et/ou des autres harmoniques impaires des tensions de barre comme signaux de position du rotor en vue d'une auto-commutation du moteur et délivre à partir de là des signaux de commande au dispositif de commutation (14) pour l'alimentation en courant des enroulements de phase (U, V, W) en fonctionnement normal,
la troisième et/ou les autres harmoniques impaires des tensions de barre du stator (22) étant envoyées d'une part par l'intermédiaire du point d'étoile (28) des enroulements de phase (U, V, W) et d'autre part par l'intermédiaire d'un point d'étoile auxiliaire (30) formé de trois résistances de phase (32, 34, 36) à un comparateur (40) en aval duquel est raccordé un intégrateur (46),
**caractérisé en ce que**
par l'intermédiaire d'un convertisseur A/N (50) et dans la plage située au-dessus de la valeur minimale prédéterminée de la vitesse de rotation du rotor, le signal de sortie de l'intégrateur (46) est amené par un comparateur (52) à hystérèse au dispositif de commande (54) lorsque le moteur est à l'arrêt et au début de l'opération de démarrage.

2. Procédé selon la revendication 1, **caractérisé en ce que** lorsque le rotor est à l'arrêt, le dispositif de commande (54) applique des impulsions de courant sur les enroulements de phase (U, V, W) du stator et **en ce que** la position de repos du rotor (24) est déterminée à partir de l'augmentation du courant dans les différents enroulements (U, V, W).

3. Procédé selon la revendication 1, **caractérisé en ce que** la durée et/ou la valeur de l'alimentation initiale en courant des enroulements de phase (U, V, W) du stator (22) sont adaptées à la charge appliquée à tout moment sur le moteur.

4. Procédé selon l'une des revendications précédentes, **caractérisé en ce que** le dispositif de commande (54) présente un microcontrôleur (µC) qui reçoit comme signaux d'entrée les signaux d'un convertisseur A/N (50), les signaux d'un comparateur (52) à hystérèse et un signal (56) de vitesse de rotation de consigne et **en ce qu'**il commande par l'intermédiaire d'un étage pilote (62) un dispositif de commutation (14) dont les sorties alimentent en courant les enroulements de phase (U, V, W) du stator.

5. Procédé selon l'une des revendications précédentes, **caractérisé en ce qu'**après que la valeur minimale prédéterminée de la vitesse de rotation du rotor a été atteinte, le dispositif de commande (54) reçoit en permanence par l'intermédiaire du comparateur (52) à hystérèse des signaux binaires de position pour l'auto-commutation du moteur en fonction de la position du rotor.

6. Procédé selon l'une des revendications précédentes, **caractérisé en ce qu'**à partir d'une valeur prédéterminée du signal analogique (∫U3) de position du rotor délivré par l'intégrateur (46) entre sa valeur de repos (R) et une oscillation (S) sensiblement sinusoïdale, le basculement entre l'alimentation initiale régulée en courant des enroulements de phase (U, V, W) et la régulation de la commutation par les flancs du signal binaire de sortie du comparateur (52) à hystérèse s'effectue en fonction de l'évolution de la troisième harmonique des tensions de barre.

7. Procédé selon l'une des revendications précédentes, **caractérisé en ce que** le basculement de l'alimentation initiale régulée en courant (T2 > T > 0) des enroulements de phase (U, V, W) à la régulation par le signal de sortie du comparateur (52) à hystérèse s'effectue lorsque le signal de sortie (∫U3) de l'intégrateur (46) atteint un premier point d'inflexion (T2).

8. Procédé selon l'une des revendications précédentes, **caractérisé en ce qu'**après la détermination de la position à l'arrêt du rotor (24), au moins deux enroulements de phase (U, V, W) du stator (22) sont alimentés en courant à une valeur initiale qui résulte d'un angle de 30° électriques à 150° électriques et de préférence d'environ 90° électriques entre l'axe de la force magnétomotrice du rotor et celui de la force magnétomotrice du stator.
